# EUROPEAN PATENT SPECIFICATION

(11) **EP 1 364 777 B1**
(45) Date of publication and mention of the grant of the patent: **03.08.2005**
(21) Application number: 03011283.3
(22) Date of filing: 17.05.2003
(51) Int. Cl.: B32B 27/12, B32B 27/32, B65D 65/40

(54) **Multi-layer laminate, packaging material and packages made therefrom**
Mehrschichtlaminat, Verpackungsmaterial und aus diesem Material hergestellte Verpackungen
Produit multicouche laminé, matériau d'emballage et emballages fabriqués au moyen de celui-ci

(30) Priority: 24.05.2002 US 155957
(43) Date of publication of application: 26.11.2003
(73) Proprietor: Ticona GmbH, 65451 Kelsterbach (DE)
(72) Inventor: Goerlitz, Wolfram, Dph, 65193 Wiesbaden (DE); Beer, Ekkehard, 65307 Bad Schwalbach (DE); Wegmann, Heinz, 87490 Haldenwang (DE)

(56) References cited:
- EP-A- 1 302 311
- WO-A-02/02324
- WO-A-03/002343
- JP-A- 10 237 234
- DATABASE WPI Section Ch, Week 199631 Derwent Publications Ltd., London, GB; Class A18, AN 1996-307222 XP002251246 & JP 08 134800 A (MITSUI PETROCHEM IND CO LTD), 28 May 1996 (1996-05-28)
- DATABASE WPI Section Ch, Week 199846 Derwent Publications Ltd., London, GB; Class A17, AN 1998-537595 XP002251247 & JP 10 237234 A (TAMAPORI KK), 8 September 1998 (1998-09-08)

## Description

The present invention relates to a multi-layer packaging material, particularly for the protection of moisture sensitive food and non-food goods, such as detergents, washing powder, zeolithe-free washing powder, moisture sensitive chemicals and foodstuffs, such as cereals, cornflakes, dried soups, chocolates, cookies and the like.

It has been tried to make packages for perishable liquid or dry foods, such as milk products, juices, cereals, moisture, oxygen and aroma proof for improving the durability.

JP-A-0813480 (Mitsui) discloses a laminated paper product comprising paper base material laminated with a layer of cyclic-olefin based resins used as a packaging material with improved moisture barrier properties.

JP-A-10237234 (Tamapori) discloses a laminated packaging film composed of three layers. The middle layer is composed of a blend of 5-50 wt% COC (cycloolefin copolymer) and 50-95 wt% LLDPE (linear low density polyethylene) having a good balance of strength and tear properties to axis- and cross-directions.

EP-A-1302311 (Nihon Tetra Pak, Nippon Zeon) discloses a container comprised of a plastic-paper laminate, where the plastic composition contains a blend of LLDPE (100 parts per weight) and norbornene-based polymers (10 to 20 parts per weight). The container is suitable for packaging food and beverages because of its good heat resistance, heat sealability and low moisture permeability.

The traditional procedure has been to provide the fiber-based packaging material with a grey aluminum foil, which provides an efficient protection against the penetration of moisture and oxygen and the escape of aromas in the packed product. However, the use of aluminum foil used for a long time is now decreasing due to its high costs, environmental hazards and regulations concerning the recycling of materials.

Aluminum is undecomposable on dumping areas, and it is difficult to regenerate packaging cardboard lined with aluminum.

Aluminum used as an oxygen and aroma barrier in food packages has been

replaced by polymers to an increasing extent; the most important polymers being ethyl vinyl alcohol copolymer (EVOH), polyamide (PA), and polyethylene terephthalate (PET). By combining these polymers with binding agents and heat sealing polymers, multi-layer cardboard has been formed, with which gas barrier characteristics almost comparable with aluminum have at best been achieved. A disadvantage of these materials are their permeability to water vapor, so these materials all have a high Moisture Vapor Transition Rate (MVTR).

This disadvantage has attempted to be overcome by the usage of polyolefin layers as moisture barriers, either alone or in combination with the polymers above. Low Density Polyethylene (PE-LD) is a widely used polyolefin used for this purpose. For even lower Moisture Vapor Transition Rates (MVTR), PE-LD layers may be combined with high density polyethylene layers (PE-HD).

A disadvantage of these solutions are high film thicknesses. Another trend also depending on material costs and tightening environmental regulations has been to decrease the amount of polymer used for the coating of packaging cardboard.

It was an object of the present invention to provide a packaging material having a lower MVTR at a given thickness and to achieve higher overall moisture barrier properties / lower MVTR, respectively. This object has been accomplished by a multi-layer laminate comprising at least one layer of fiber material and at least one layer of plastic laminated thereto, which plastic layer comprises a blend of more than 50 weight percent of a cycloolefin copolymer and polyethylene.

The invention also relates to packaging materials consisting of multi-layer laminates according to the invention, and to packagings made thereof. Such packagings may have the shape of boxes, tumblers or may be boxes or tumblers with at least one handle. The MVTR of multi-layer laminates according to the invention are generally about 3 to about 5 times lower than the MVTR of multi-layer laminates equipped with PE-LD as moisture vapor barrier layer and about 2 to about 3 times lower than the MVTR of multi-layer laminates equipped with a layer sequence of PE-LD / PE-HD / PE-LD as moisture vapor barrier layer, when the MVTR is measured at a temperature of 23 °C and 85% of relative humidity. According to the invention multi-layer laminates can be provided having an MVTR of 1.0 g per square meter and day with a coating thickness of 23 g/m²; the barrier properties are about equal to more than 100 g/m² of PE-LD as moisture vapor barrier layer, and the amount of plastic in packaging materials according to the invention are preferably equal or less than 5 percent by weight of the total packaging. As the base material for multi-layer laminates according to the invention, a fibre material such as board, paper, kraft paper, cardboard of bleached sulphate pulp may be used. The multi-layer laminate may contain more than one layer of board or paper. In a preferred embodiment, the multi-layer laminate comprises at least one further layer consisting essentially of polyethylene.

In general, any type of polyethylene may be used for the purposes mentioned above, like PE-HD or PE-LLD, although the use of PE-LD is preferred. Suitable polyolefins are described in Saechtling, Kunststoff-Taschenbuch, Hanser-Verlag, 27^{th} edition, 1998 on pages 375 to 415, which document is incorporated by reference for all useful purposes.

In a further preferred embodiment the plastic layer comprising a cycloolefin copolymer consists essentially of at least one cycloolefin copolymer. This embodiment is preferred if maximum barrier properties are desired, however, such a layer can sometimes be difficult to laminate to the fibre material. An option to improve the adhesion between the plastic layer comprising a cycloolefin copolymer and other materials is a surface treatment of this layer, which treatment preferably leads to a partial oxidation of the surface. Examples are corona treatment, flame treatment or the like. Preferably, the plastic layer comprising a cycloolefin copolymer comprises more than 60 percent by weight, preferably 60 to 80 percent by weight, of a cycloolefin copolymer. The usage of this embodiment provides improved adhesion to the fiber material and may be easily laminated to the fiber material, particularly if the plastic layer comprising a cycloolefin copolymer is a blend of about 60 to about 80 percent by weight of the cycloolefin copolymer with PE-LD. Even types of paper which are particularly difficult to be laminated thereto may easily adhere to such a plastic layer. Cycloolefin copolymers usually show a high neck-in on film extrusion which can be reduced by coextrusion or blending of the cycloolefin copolymer with PE-LD. The PE-LD used preferably has a Melt Flow Index (MFI) of about 4 to about 7.5.

In further preferred embodiments, different layer sequences may be created to optimize the multi-layer laminate for various purposes. Such preferred layer sequences are:
- Fiber material / plastic layer comprising a cycloolefin copolymer
- Fiber material / plastic layer comprising a cycloolefin copolymer / PE-LD
- Fiber material / PE-LD / plastic layer comprising a cycloolefin copolymer / PE-LD, wherein the fiber material is preferably board or paper.

Particularly preferable multi-layer laminates have one of the following layer sequences:
- board / PE-LD / plastic layer comprising a cycloolefin copolymer / PE-LD / paper
- board / plastic layer comprising a cycloolefin copolymer / PE-LD / paper
- board / plastic layer comprising a cycloolefin copolymer / paper
- board / Blend of PE-LD and a cycloolefin copolymer / paper

Such multi-layer laminates are preferred if contact between plastic and the content is to be avoided, or if the illusion of a pure paper packaging is desired. Such multi-layer laminates are particularly useful for foodstuffs or detergents, particularly washing powder. Usage of such packaging is of particular advantage for washing powder which do not contain zeolithes. Such washing powders are more moisture sensitive than washing powders containing zeolithes; however, such washing powders often leave light spots on dark clothing, which can be avoided by using zeolithe-free washing powders.

If oxygen barrier properties and/or aroma barrier properties are desired, appropriate polymers with such properties are for example EVOH and polyamides, particularly amorphous polyamides such as Selar® obtainable from Dupont. Preferable layer sequences are for example :
- fiber material / EVOH / tie / plastic layer comprising a cycloolefin copolymer / PE-LD
- fiber material / tie / EVOH / tie / plastic layer comprising a cycloolefin copolymer / PE-LD
- fiber material / tie / plastic layer comprising a cycloolefin copolymer / tie / Polyamide. In these embodiments board is preferably used as fiber material. The tie layer may be necessary to ensure adhesion between the layers, particularly between the plastic layer comprising a cycloolefin copolymer and the EVOH and the polyamide.

The tie layer may comprise a modified polyolefin, and preferably consists essentially of a modified polyolefin. The modified polyolefin comprises at least a group like carboxyl, carboxyl anhydride, metal carboxylate, carboxy ester, imino, amino or epoxy group in an amount of 1 percent by weight to 50 percent by weight of the modified polyolefin. Examples for such modified polyolefins comprise modified polyolefin copolymers or grafted copolymers, which may be obtained by incorporating groups like maleic anhydride, fumaric anhydride, citric anhydride, n-phenylmaleimide, n-cyclohexylmaleimide, glycidyl acrylate, glycidyl methacrylate, glycidyl vinyl benzoate, N-[4-(2,3-epoxpropoxy)-3,5-dimethylbenzyl]acrylamide (AXE), alkylmethacrylate and/or derivatives thereof into polyolefins like polyethylene, polypropylene, ethylene/propylene copolymers or polyamide grafted polyolefins. Such products can be obtained by compounding the polyolefin with maleic anhydride or other substances as mentioned above together with a radical initiator, like for example AIBN or benzoyl peroxide.

The modified polyolefin is not limited in its degree of polymerization and may be an oligomer as well. Preferred modified polyolefins are
Maleic anhydride modified polyethylene,
Maleic anhydride modified polypropylene,
Maleic anhydride modified polyethylene/polypropylene-copolymer,
Fumaric acid modified polyethylene,
Fumaric acid modified polypropylenes,
Fumaric acid modified polyethylene/polypropylene-copolymer,
Glycidylmethacrylate modified polyethylene,
Glycidylmethacrylate modified polypropylene,
AXE modified polyethylene,
AXE modified polypropylene.

Further materials suitable to be used in the tie layer are copolymers of ethylene with unsaturated esters like vinyl acetate, (meth)acrylic esters, for example ethyl methacrylate, and copolymers of ethylene with vinylalcohol.

Particular preference is given to maleic-acid grafted polyethylene and maleic-acid grafted polypropylene.

The plastic layer comprising a cycloolefin copolymer may comprise usual additives in an amount of up to 0.5 percent by weight, such as lubricants or antioxidants, like Irganox® available from Ciba Specialty Chemicals.

The layer thicknesses for the plastic layer comprising a cycloolefin copolymer are generally in the range of about 10 g/m² to about 50 g/m². If this film is a blend of a cycloolefin copolymer, the thickness is preferably in the range of about 10 g/m² to about 20 g/m².

Additional layers made of PE-LD preferably have a thickness of from about 1 g/m² to about 10 g/m².

The thickness of the layer made of polyamide or EVOH has to be adjusted to meet the desired oxygen barrier properties.

The thickness of the fiber material layers and the plastic layers may be adjusted to meet the desired barrier properties or a given weight percentage of plastic content of the multi-layer laminate.

The overall thickness of the polymer layer on the fiber material generally is between about 5 µm and about 100 µm, preferably between about 12 µm and about 50 µm, more preferably between about 25 to about 40 µm. If the overall thickness exceeds 100µm, the processing becomes more difficult so the thickness should preferably be less than 100 µm.

The cycloolefin copolymer preferably has a glass transition temperature from about 60°C to about 150°C, preferably about 70°C to about 100°C. Most preferably, the glass transition temperature is about 80°C. The cycloolefin copolymer is preferably a polymer comprising 0.1 - 99 mole %, preferably 3 - 75 mole %, particularly preferably 10 mole % to 65 mole % of cycloolefin copolymers, polymerized units of at least one cyclic olefin of the formulae I, II, II', III, IV, V or VI 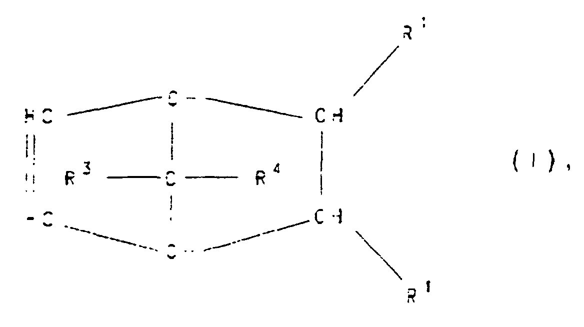 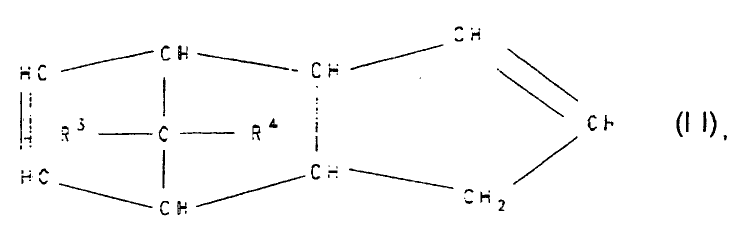 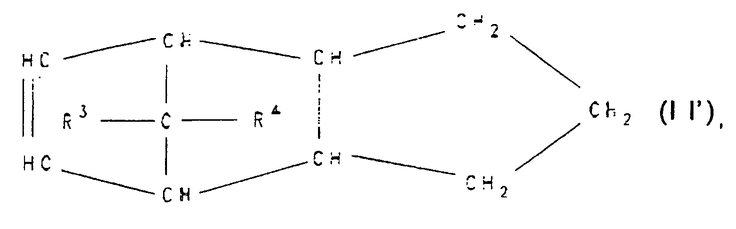 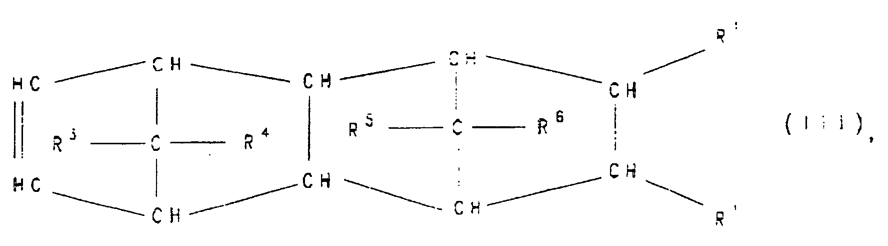 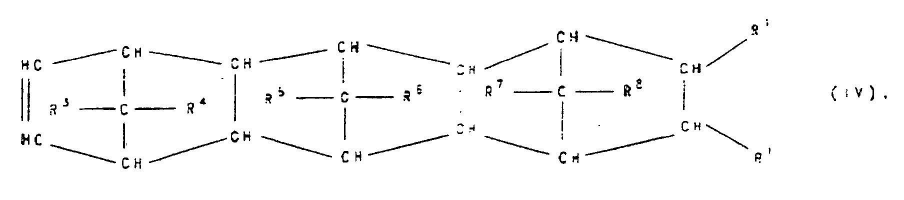 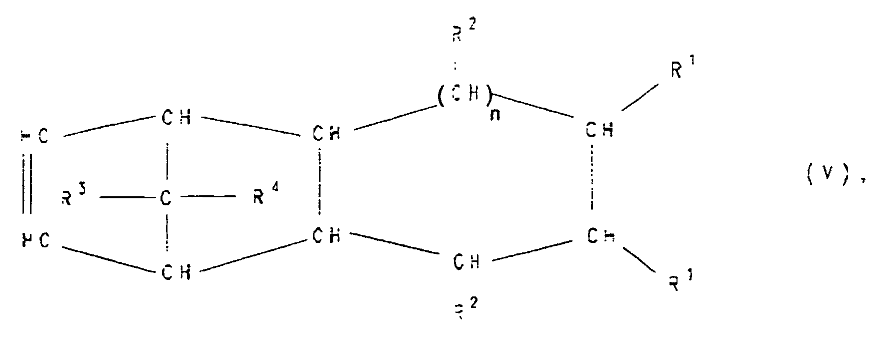 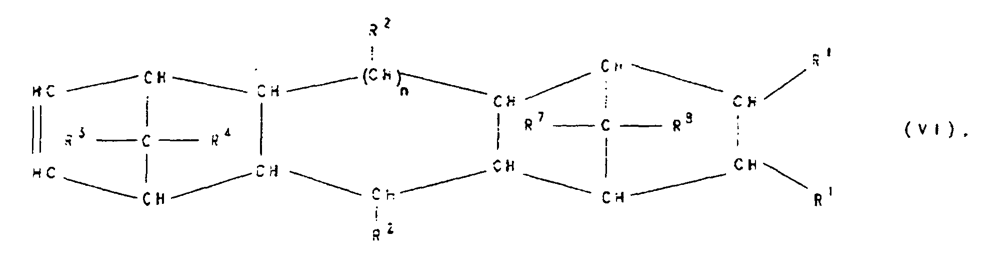 wherein R¹, R², R³, R⁴, R⁵, R⁶, R⁷ and R⁸ are the same or different and are hydrogen or a C₁-C₂₀-hydrocarbon rest, like a linear or branched C₁-C₈-alkyl rest, C₆-C₁₈-aryl radical, C₇-C₂₀-alkylenaryl rest, a cyclic or acydic C₂-C₂₀-alkenyl rest, or may form a saturated, unsaturated or aromatic ring, wherein equal rests R¹ to R⁸ in different formulae I to VI can be different, wherein n is an integer of from 0 to 5, and comprises 25 to 97 mole %, preferably 35 mole % to 90 mole % polymerized units which are derived from at least one acyclic olefin of formula VII 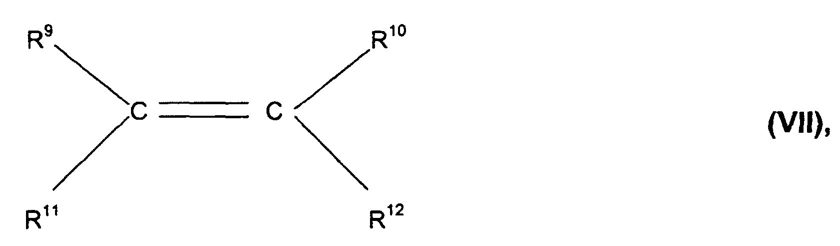 wherein R⁹, R¹⁰, R¹¹ und R¹² are the same or different and are a hydrogen, a linear, branched, saturated or unsaturated C₁-C₂₀-hydrocarbon rest such as a C₁-C₈-alkyl rest or a C₆-C₁₈-aryl rest. Preferably, the acyclic olefin is an α-olefin or ethylene. Particularly preferably, the cycloolefin copolymer is a copolymer of ethylene, propylene or another alpha olefin having preferably 2 to 20 carbon atoms with at least one cyclic olefin of the formulae I, II, II', III, IV, V or VI. Particularly preferably, the cycloolefin copolymer is a copolymer of norbornene or tetracyclododecene with ethylene or an alpha olefin, like propylene. Most preferably, the cycloolefin copolymer is a copolymer of ethylene and norbornene or ethylene and tetracyclododecene.

Cycloolefin copolymers may be obtained by ring opening polymerization of at least one monomer of the formulae I to VI, followed by a hydration step.

The cycloolefin copolymer may further comprise 0 to 45 mol-% polymerized units which are derived from one or more monocyclic olefins of the formula VIII 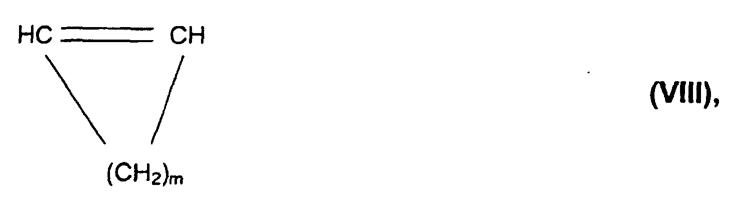 wherein m is an integer from 2 to 10.
The amount of polymerized units which are derived from cyclic, particularly polycyclic olefins is preferably from about 3 mol-% to about 75 mol-%. The amount of polymerized units derived from the acyclic olefin is preferably from about 5 mol-% to about 80 mol-% of the cycloolefin copolymer.

Preferably the cycloolefin copolymer consists of polymerized units derived from one or more polycyclic olefins, particularly polycyclic olefins of the formulae I or III, and polymerized units which are derived from one or more acyclic olefins of the formula VII, particularly α-olefins with 2 to 20 carbon atoms. Particularly preferred are cycloolefin copolymers consisting of polymerized units derived from a polycyclic olefin of the formulae I or III and an acyclic Olefin of the formula VII. Further preferred are terpolymers, which consist of polymerized units derived from a polycyclic monoolefin of the formula I or III, an acyclic monoolefin of the formula VII and a cyclic or acyclic olefin, comprising at least two double bonds (polyene), particularly cyclic, preferably polycyclic dienes like norbornadiene or cyclic, particularly preferably polycyclic alkenes carrying a C₂-C₂₀-alkenyl rest, like for example vinylnorbornene.

The cycloolefin copolymer can be prepared at temperatures of about -78°C to about 200°C and a pressure of about 0.001 to about 200 bar in the presence of one or more catalyst systems comprising at least one transition metal compound and optionally a cocatalyst a optionally a carrier material. Suitable transition metal compounds are metallocenes, particularly stereorigid metallocenes. Examples for suitable catalyst systems are for example described in EP-A-407 870, EP-A-485 893 and EP-A-503 422, which documents are incorporated by reference for all useful purposes.
Examples for suitable transition metal compounds are
rac-dimethylsilylbis(1-indenyl)zirconium dichloride,
rac-dimethylgermylbis(1-indenyl)zirconium dichloride,
rac-phenylmethylsilylbis(1-indenyl)zirconium dichloride,
rac-phenylvinylsilylbis(1-indenyl)zirconium dichloride,
1-silacyclobutylbis(1-indenyl)zirconium dichloride,
rac-diphenylsilylbis(1-indenyl)hafnium dichloride,
rac-phenylmethylsilylbis(1-indenyl)hafnium dichloride,
rac-diphenylsilylbis(1-indenyl)zirconium dichloride,
rac-ethylene-1,2-bis(1-indenyl)zirconium dichloride,
dimethylsilyl(9-fluorenyl)(cyclopentadienyl)zirconium dichloride,
diphenylsilyl(9-fluorenyl)(cyclopentadienyl)zirconium dichloride,
bis(1-indenyl)zirconium dichloride,
diphenylmethylene(9-fluorenyl)cyclopentadienylzirconium dichloride,
isopropylene(9-fluorenyl)cyclopentadienylzirconium dichloride,
rac-isopropylidene-bis(1-indenyl)zirconium dichloride,
rac-isopropylidene-bis(4,5,6,7-tetrahydro-1-indenyl)zirconium dichloride,
phenylmethylmethylene(9-fluorenyl)cyclopentadienylzirconium dichloride,
isopropylene(9-fluorenyl)(1-(3-isopropyl)cyclopentadienyl)zirconium dichloride,
isopropylene(9-fluorenyl)(1-(3-methyl)cydopentadienyl)zirconium dichloride,
diphenylmethylene(9-fluorenyl)(1-(3-methyl)cyclopentadienyl)zirconium dichloride,
methylphenylmethylene(9-fluorenyl)(1-(3-methyl)cyclopentadienyl)-zirconium dichloride,
dimethylsilyl(9-fluorenyl)(1-(3-methyl)cyclopentadienyl)zirconium dichloride,
diphenylsilyl(9-fluorenyl)(1-(3-methyl)cyclopentadienyl)zirconium dichloride,
diphenylmethylene(9-fluorenyl)(1-(3-tert-butyl)cyclopentadienyl)zirconium dichloride,
isopropylene(9-fluorenyl)(1-(3-tert-butyl)cyclopentadienyl)zirconium dichloride,
isopropylene(cyclopentadienyl)(1-indenyl)zirconium dichloride,
diphenylcarbonyl(cyclopentadienyl)(1-indenyl)zirconium dichloride,
dimethylsilyl(cyclopentadienyl)(1-indenyl)zirconium dichloride,
isopropylene(methylcyclopentadienyl)(1-indenyl)zirconium dichloride,
4-(η⁵-cyclopentadienyl)-4,7,7-trimethyl(η⁵-4,5,6,7-tetrahydroindenyl)-zirconium dichloride,
[4-(η⁵-cyclopentadienyl)-4,7,7-triphenyl(η⁵-4,5,6,7-tetrahydroindenyl)]zirconium dichloride,
[4-(η⁵-cyclopentadienyl)-4,7-dimethyl-7-phenyl(η⁵-4,5,6,7-tetrahydroindenyl)]zirconium dichloride,
[4-(η⁵-3'-tert-butylcyclopentadienyl)-4,7,7-triphenyl(η⁵-4,5,6,7-tetrahydroindenyl)]zirconium dichloride,
[4-(η⁵-3'-tert-butylcyclopentadienyl)-4,7-dimethyl-7-phenyl(η⁵-4,5,6,7-tetrahydroindenyl)]zirconium dichloride,
[4-(η⁵-3'-methylcyclopentadienyl)-4,7,7-trimethyl(η⁵-4,5,6,7-tetrahydroindenyl)]zirconium dichloride,
[4-(η⁵-3'-methylcyclopentadienyl)-4,7,7-triphenyl(η⁵-4,5,6,7-tetrahydroindenyl)]zirconium dichloride,
[4-(η⁵-3'-methylcyclopentadienyl)-4,7-dimethyl-7-phenyl(η⁵-4,5,6,7-tetrahydroindenyl)]zirconium dichloride,
[4-(η⁵-3'-isopropylcyclopentadienyl)-4,7,7-trimethyl(η⁵-4,5,6,7-tetrahydroindenyl)]zirconium dichloride,
[4-(η⁵-3'-isopropylcyclopentadienyl)-4,7,7-triphenyl(η⁵-4,5,6,7-tetrahydroindenyl)]zirconium dichloride,
[4-(η⁵-3'-isopropylcyclopentadienyl)-4,7-dimethyl-7-phenyl(η⁵-4,5,6,7-tetrahydroindenyl)]zirconium dichloride,
[4-(η⁵-cyclopentadienyl)(η⁵-4,5-tetrahydropentalene)]zirconium dichloride,
[4-(η⁵-cyclopentadienyl)-4-methyl(η⁵-4,5-tetrahydropentalene)]zirconium dichloride,
[4-(η⁵-cyclopentadienyl)-4-phenyl(η⁵-4,5-tetrahydropentalene)]zirconium dichloride,
[4-(η⁵-cyclopentadienyl)-4-phenyl(η⁵-4,5-tetrahydropentalene)]zirconium dichloride,
[4-(η⁵-3'-methylcyclopentadienyl)(η⁵-4,5-tetrahydropentalene)]zirconium dichloride,
[4-(η⁵-3'-isopropylcyclopentadienyl)(η⁵-4,5-tetrahydropentalene)]zirconium dichloride,
[4-(η⁵-3'-benzylcyclopentadienyl)(η⁵-4,5-tetrahydropentalene)]zirconium dichloride,
[2,2,4-trimethyl-4-(η⁵-cyclopentadienyl)(η -4,5-tetrahydropentalene)]zirconium dichloride
[2,2,4-trimethyl-4-(η -(3,4-diisopropyl)cyclopentadienyl)(η -4,5-tetrahydropentalene)]zirconium dichloride.
The multi-layer laminates may be used for manufacturing packaging materials, which preferably consist of the multi layer laminates according to the invention. From these packaging materials packages for various products can be produced, which can have different shapes, like boxes, tumblers or the like. Preferably, these packages having the shape of tumblers or boxes have at least one handle. Such packages can be advantageously for protection of moisture sensitive food and non-food goods, such as detergents, washing powder, zeolithe-free washing powder, moisture sensitive chemicals and foodstuffs, such as cereals, cornflakes, dried soups, pet food, chocolates, cookies and the like. If desired, the package can be equipped to be heat-sealable. Such packagings can be used for packaging for milk, soft-drinks, juices or the like, in which cases particularly tight packages are desired which have low permeation rates. These packages are preferably in the shape of milk boxes. For heat-sealable equipment of the packages, the fiber material can preferably be equipped with materials and/or layer sequences as described in US 5693414 and US 5861208, which documents are incorporated by reference for all useful purposes.

### Examples / Best Modes

The cycloolefin copolymer (COC) used was TOPAS® 8007, Ticona GmbH, Kelsterbach.
The PE-LD used had a density of 922 kg/m³, an MFI of 7g/10 minutes.
The PE-HD used had a density of 964 kg/m³ and an MFI 4 g/10minutes.
The modified polyethylene used as tie layer was Bynel® available from Dupont.
As amorphous polyamide Selar® from Dupont was used.
The board used had a thickness of 385 g/m².
The kraft paper used had a thickness of 65 g/m².
MVTR measured under tropical conditions means at a temperature of 38°C and a relative humidity of 90%, normal conditions means at a temperature of 23°C and a relative humidity of 85%. MVTR are given in g/m² 24h. The MVTR was measured according to DIN 53122.

### Comparative Example 1

The board used was covered with different layer sequences by means of coextrusion.
The overall plastic layer thickness was 24 g/m².
The layer thicknesses in examples B and C were 3/18/3 g/m²
A) board / PE-LD
B) board / PE-LD / PE-HD / PE-LD
C) board / PE-LD / COC / PE-LD
A, B and C are Comparative Examples.
Table 1 shows the results. The MVTR can be significantly improved with substitution of even PE-HD with COC.

**Table 1**

| Example | MVTR normal | MVTR trop. |
|---|---|---|
| A | 4.8 | 19 |
| B | 2.5 | 9.2 |
| C | 1.0 | 3.2 |

### Example 2

Different multi-layer laminates of board with COC-LDPE blends were produced with different layer thicknesses (given in µm).

**Table 2**

| Material | | 100 µm | | 25 µm | | 12 µm | |
|---|---|---|---|---|---|---|---|
| | | 38°C/90% | 23°C/85% | 38°C/90% | 23°C/85% | 38°C/90% | 23°C/85% |
| COC* | | 1,0 | 0,3 | 4 | 1,2 | 8 | 2,4 |
| Blends | 20% LDPE | 1,2 | 0,3 | 5 | 1,2 | 10 | 2,6 |
| | 40% LDPE | 1,5 | 0,4 | 6 | 1,4 | 13 | 2,9 |
| | 60% LDPE* | 2,4 | 0,4 | 10 | 1,7 | 20 | 3,5 |
| | 80% LDPE* | 3,9 | 0,6 | 16 | 2,3 | 32 | 4,8 |
| PE-LD* | | 4,8 | 0,9 | 19 | 3,7 | 40 | 7,7 |

| | | | | | | | |
|---|---|---|---|---|---|---|---|
| * not according to the claims | | | | | | | |

### Comparative Example 3

Different multi layer laminates were produced by coextrusion to investigate the influence of layer thicknesses of COC on the MVTR under tropical conditions. A is a comparative example with a single PE-LD layer (thickness 13 g/m²). MVTR given in g / m² 24h
A) PE-LD MVTR: 35
B) PE-LD / COC /PE-LD, layer thicknesses 2 / 4 / 7 g/m² MVTR: 15
C) PE-LD / COC /PE-LD layer, thicknesses 2 / 9 / 2 g/m² MVTR: 9

### Comparative Example 4

To obtain a laminated article with maximum barrier properties and moderate weight, a layer sequence was extruded with the layer sequence board / PE-LD (2 g/m²) / COC (19 g/m²) / PE-LD (2 g/m²) / kraft paper. The MVTR at normal conditions was determined being 1 g/m² 24h. The barrier properties are roughly equivalent to 100 g/m² PE-LD coating weight. This laminating material combines excellent moisture barrier while containing less than 5% plastic weight.

### Comparative Example 5

To obtain a laminated article having excellent moisture barrier board was coated with a COC layer of 40 µm and a PE-LD layer of 10 µm thickness. MVTR tropical is 2 g/m² 24h. This Comparative example has the maximum barrier properties with a practical layer thickness.

### Comparative Example 6

To obtain a laminated article with excellent MVTR and oxygen transmission rate (OTR) a laminated article with the layer sequence board / tie (3 g/m²) / COC (10 g/m²) / tie (3 g/m²) / amorphous polyamide (5 µm) was produced. The MVTR was 9 g/m² 24h, the OTR 80 cm³/m² 24h bar.

## Claims

1. Multi-layer laminate comprising at least one layer of fibre material and at least one layer of plastic laminated thereto, wherein the plastic layer comprises a blend of more than 50 percent by weight of cycloolefin copolymer and polyethylene.

2. Multi-layer laminate according to claim 1, comprising at least one further layer consisting essentially of polyethylene.

3. Multi-layer laminate according to claim 2, wherein the polyethylene is a low density polyethylene (PE-LD).

4. Multi-layer laminate according to one or more of the preceding claims, wherein the polyethylene comprised in the blend is a low density polyethylene (PE-LD).

5. Multi-layer laminate according to claim 4, wherein the plastic layer comprising a cycloolefin copolymer comprises more than 60 percent by weight, preferably 60 to 80 percent by weight of a cycloolefinic copolymer.

6. Multi-layer laminate according to one or more of the preceding claims having a layer sequence: Fiber material, preferably board or paper / Plastic layer comprising a cycloolefin copolymer / PE-LD.

7. Multi-layer laminate according to one or more of the preceding claims having a layer sequence: Fiber material, preferably board or paper / PE-LD / Plastic layer comprising a cycloolefin copolymer / PE-LD.

8. Multi-layer laminate according to one or more of the preceding claims comprising an oxygen barrier layer consisting essentially of an ethylvinyl alcohol or an amorphous polyamide.

9. Packaging material consisting of a multi layer laminate according to one or more of the preceding claims.

10. Package for moisture sensitive chemicals, detergents, washing powder, zeolithe-free washing powder, dry foodstuffs, dry soups, cereals, pet food, chocolates, cookies, cornflakes and the like, consisting of a packaging material according to claim 9.

11. Package according to claim 10 having a shape of a box, tumbler, box or tumbler with at least one handle.

## Patentansprüche

1. Mehrschichtlaminat mit mindestens einer Fasermaterialschicht und mindestens einer darauf auflaminierten Kunststoffschicht, bei dem die Kunststoffschicht eine Mischung von mehr als 50 Gewichtsprozent Cycloolefincopolymer und Polyethylen enthält.

2. Mehrschichtlaminat nach Anspruch 1 mit mindestens einer weiteren Schicht, die im wesentlichen aus Polyethylen besteht.

3. Mehrschichtlaminat nach Anspruch 2, bei dem es sich bei dem Polyethylen um ein Polyethylen niederer Dichte (PE-LD) handelt.

4. Mehrschichtlaminat nach einem oder mehreren der vorhergehenden Ansprüche, bei dem es sich bei dem in der Mischung enthaltenen Polyethylen um ein Polyethylen niederer Dichte (PE-LD) handelt.

5. Mehrschichtlaminat nach Anspruch 4, bei dem die ein Cycloolefincopolymer enthaltende Kunststoffschicht mehr als 60 Gewichtsprozent und vorzugsweise 60 bis 80 Gewichtsprozent eines Cycloolefincopolymers enthält.

6. Mehrschichtlaminat nach einem oder mehreren der vorhergehenden Ansprüche mit der Schichtenfolge: Fasermaterial, vorzugsweise Pappe oder Papier / Kunststoffschicht, enthaltend ein Cycloolefincopolymer / PE-LD.

7. Mehrschichtlaminat nach einem oder mehreren der vorhergehenden Ansprüche mit der Schichtenfolge: Fasermaterial, vorzugsweise Pappe oder Papier / PE-LD / Kunststoffschicht, enthaltend ein Cycloolefincopolymer / PE-LD.

8. Mehrschichtlaminat nach einem oder mehreren der vorhergehenden Ansprüche mit einer Sauerstoffbarriereschicht, die im wesentlichen aus einem Ethylvinylalkohol oder einem amorphen Polyamid besteht.

9. Verpackungsmaterial, bestehend aus einem Mehrschichtlaminat nach einem oder mehreren der vorhergehenden Ansprüche.

10. Verpackung für feuchtigkeitsempfindliche Chemikalien, Wasch- und Reinigungsmittel, Waschpulver, zeolithfreies Waschpulver, Trockenlebensmittel, Trockensuppen, Müsli, Haustierfutter, Pralinen, Kekse, Cornflakes und dergleichen, bestehend aus einem Verpackungsmaterial nach Anspruch 9.

11. Verpackung nach Anspruch 10 in Form einer Schachtel, eines Tumblers, einer Schachtel mit mindestens einem Griff oder eines Tumblers mit mindestens einem Griff.

## Revendications

1. Stratifié multicouche comprenant au moins une couche de matière fibreuse et au moins une couche de plastique stratifiée par-dessus, dans lequel la couche de plastique comprend un mélange de plus de 50 pour cent en poids de copolymère de cyclooléfine et de polyéthylène.

2. Stratifié multicouche selon la revendication 1, comprenant au moins une autre couche constituée essentiellement de polyéthylène.

3. Stratifié multicouche selon la revendication 2, dans lequel le polyéthylène est un polyéthylène basse densité (PE-LD).

4. Stratifié multicouche selon une ou plusieurs des revendications précédentes, dans lequel le polyéthylène compris dans le mélange est un polyéthylène basse densité (PE-LD).

5. Stratifié multicouche selon la revendication 4, dans lequel la couche de plastique comprenant un copolymère de cyclooléfine comprend plus de 60 pour cent en poids, de préférence 60 à 80 pour cent en poids, d'un copolymère cyclooléfinique.

6. Stratifié multicouche selon une ou plusieurs des revendications précédentes comportant la suite de couches : matière fibreuse, de préférence carton ou papier/couche de plastique comprenant un copolymère de cyclooléfine/PE-LD.

7. Stratifié multicouche selon une ou plusieurs des revendications précédentes comportant la suite de couches : matière fibreuse, de préférence carton ou papier/PE-LD/couche de plastique comprenant un copolymère de cyclooléfine/PE-LD.

8. Stratifié multicouche selon une ou plusieurs des revendications précédentes comprenant une couche de barrière à l'oxygène constituée essentiellement d'un alcool éthylvinylique ou d'un polyamide amorphe.

9. Matériau d'emballage constitué d'un stratifié multicouche selon une ou plusieurs des revendications précédentes.

10. Emballage pour produits chimiques sensibles à l'humidité, détergents, poudre à laver, poudre à laver sans zéolithe, denrées alimentaires sèches, soupes déshydratées, céréales, aliments pour animaux, chocolats, petits gâteaux, flocons de maïs et analogues, constitué d'un matériau d'emballage selon la revendication 9.

11. Emballage selon la revendication 10 ayant la forme d'une boîte, d'un tonneau, d'une boîte ou d'un tonneau doté d'au moins une poignée.
